# EUROPEAN PATENT APPLICATION

(11) **EP 2 629 039 A1**
(43) Date of publication of application: **21.08.2013**
(21) Application number: 12155955.3
(22) Date of filing: 17.02.2012
(51) Int. Cl.: F28D 7/00, B29C 44/34

(54) **Extensional flow heat exchanger for polymer melts**

(71) Applicant: Armacell Enterprise GmbH, 48153 Münster (DE)
(72) Inventor: Meller, Mika, 04400 Jarvenpaa (FI); Gauder, Frederic, 4800 Verviers (BE)
(74) Representative: von Füner, Nicolai

(57) **Abstract**

An extensional flow static heat exchanger with at least two components of tubular cooling elements arranged in a flow passage adapted to be flown through by a flow medium in a flowing direction, wherein the components are successively arranged in the flowing direction, each component consists of a first set and a second set of at least two cooling elements, the cooling elements of the first and the second set are spaced substantially parallel to each other in a plane running substantially perpendicularly to the flowing direction, the cooling elements of the first set being angularly offset to the cooling elements of the second set with respect to the longitudinal axis of the flow passage, and the cross sections of the cooling elements have a convex profile on the upstream and downstream side with regard to the flow direction or a droplet shape, the cooling elements of the first set of the adjacent component are arranged at least partially in the space between two cooling elements of the first set of the previous component, and the cooling elements of the second set of the adjacent component are arranged at least partially in the space between two cooling elements of the second set of the previous component, a process for producing a low density extruded thermoplastic foam material and a low density extruded thermoplastic foam material.

## Description

The invention refers to an extensional flow static heat exchanger with at least two components of tubular cooling elements arranged in a flow passage adapted to be flown through by a flow medium in a flowing direction, wherein the components are successively arranged in the flowing direction, each component consists of a first set and a second set of at least two cooling elements. The cooling elements of the first and the second set are spaced substantially parallel to each other in a plane running substantially perpendicularly to the flowing direction, the cooling elements of the first set being angularly offset to the cooling elements of the second set with respect to the longitudinal axis of the flow passage, and the cross sections of the cooling elements have a convex profile on the upstream and downstream side with regard to the flow direction or a droplet shape, the cooling elements of the first set of the adjacent component are arranged at least partially in the space between two cooling elements of the first set of the previous component, and the cooling elements of the second set of the adjacent component are arranged at least partially in the space between two cooling elements of the second set of the previous component. Moreover, the invention refers to a process for producing a low density extruded thermoplastic foam material and a low density extruded thermoplastic foam material obtainable by the above mentioned process.

Physical foaming of thermoplastic material is a very challenging art. One needs first to melt the material and mix it with any required additives, then keep the material under high pressure and inject the physical blowing agent (hence physical foaming) and then homogenize the mixture and bring the material mixture to a temperature close to its solidification point. Furthermore, the pressure in the extrusion die must remain high enough for the physical blowing agent to remain in the mixture. When low density foams, typically between 300 kg/m³ and even down to 12 kg/m³, are in question, maintaining high pressures and low temperatures gets very challenging. Dropping down the temperature by several, even tens, of degrees is not simple, and many different ideas have been tested and patented.

Already among the very first thermoplastic foam patents, the need for cooling of the melt has been mentioned, and in many cases even patented. The two most common ways to cool down the melt is to use either a dynamic or a static cooling device, in the latter case it is a static heat exchanger. Typical dynamic cooling device configuration is a tandem-line, where the first extruder (typically a twin-screw extruder) acts as melting and homogenization equipment, and the second extruder, typically a single-screw, is cooled both from exterior (barrel) and from the interior (screw). Such has been described for example in DE 1914584, US 4958933 and US 4022858.

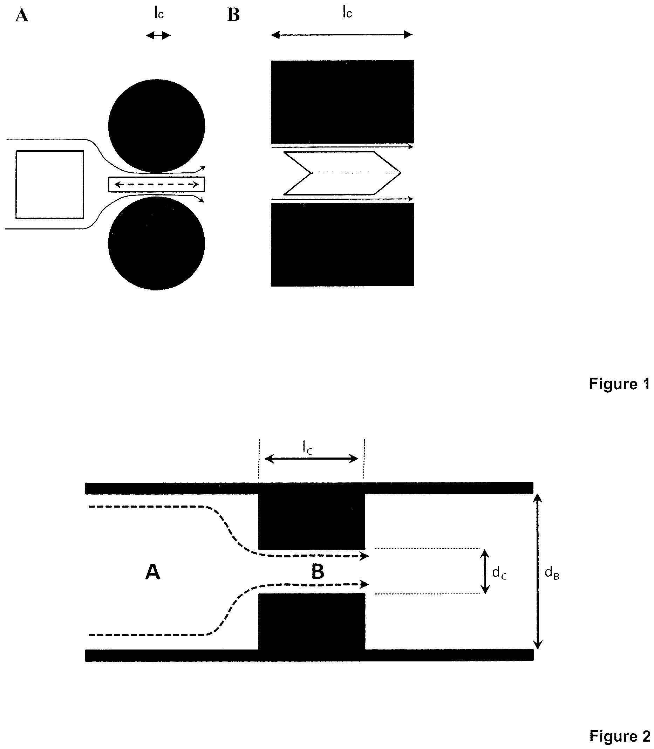

Static heat exchangers are compact and cost efficient equipment, which typically employ both distributive mixing and cooling. The most known device is a Colombo melt cooler, where the material is pushed through numerous small, cooled orifices (channels). The surface area of the cooled metal (wall of the channel) is very large, so the material is cooled down very effectively (for example EP 0071016). However, this type of heat exchanger is based on laminar flow, and the material is subjected to a significant amount of shear deformation (see Figure 1B for description of laminar flow and shear deformation).

Other alternative static heat exchangers are so called Sulzer mixers (EP 0727249, EP 1437173 and EP 1123730), which are typically cooled only from the exterior, and the mixing elements are used to move the molten material randomly in the mixer and move new material close to the cooled surface. Company Fluitec has recently improved the design of Sulzer mixer by incorporating also interior cooling (EP 1067352 and EP 2113732). A similar idea is described also in EP 0074570 and EP 0884549 where the tubes inside the exchanger are cooled down. All of these designs have the disadvantage that the cooling elements are in a 0° to max. 60° angle with the flow. Because the material will travel in the direction of least resistance, only a small part of the flow goes through in between the tubes, whereas most of the flow takes place in the direction of the tubes, that its flow is of laminar flow type. The flow lines in a heat exchanger similar to Sulzer or Fluitec design is depicted in terms numerical simulation of the flow in http://www.fluitec.ch/cms/download.php?f=3cb2fbf0e4f60e6142c39044452bfd7d. Because of laminar flow, the shear deformation is the dominant type of deformation, and shear deformation is widely known as the main cause for heating in polymer melts. The difference between extensional deformation in converging flow and shear deformation in laminar flow is depicted in Figures 1A and 1B.

Also, as a combination of static and dynamic cooling devices was introduced by Colombo, where the melt is transported by an extruder and pushed through a static heat exchanger (US 4324493) which is built around the extruder. To our knowledge, this also did not find commercial application, most likely because of excessive shear heating in the small channels. Furthermore other designs have been patented and introduced, such as EP 1426099, EP 2181827, DE 1213385, DE 19803362 and US 6622514, but, to our knowledge, these are not commercially used.

The main disadvantage of existing cooling devices, whether static or dynamic, is that the cooling capacity is limited, mostly because of their design, where laminar flow, that is shear deformation, is dominantly present. Shear deformation creates shear heating and a significant part of the removed energy (heat) is therefore regenerated in the heat exchanger. Furthermore, in many cases, such as the Sulzer mixer, the amount of cooled surface in respect to throughput is very limited. In order to improve surface per throughput ratio, some attempts have been made to use several static heat exchangers, which has improved the processing in some cases (DE 19958037, DE19848537 and US 4746477), but this approach cannot be used for all materials due to increased pressure drop and long residence times.

Therefore, the existing static heat exchangers, or melt coolers, are not ideal for thermally sensitive materials, such as PET, PBT, PC, PEEK, PEI, PMI, PMMA, PS, PVC, PA, and other engineering plastics, as they either create too much heat due to laminar flow, or have too long residence times due to oversized design. However the use of extensional heat exchanger is not limited to thermally sensitive materials, as the amount of generated heat in comparison to removed heat is negligible and therefore use of such also for commodity foams such as polyolefins and polystyrenes would be of an advantage.

### Description of the invention

The subject matter of the invention is an extensional flow static heat exchanger with at least two components of tubular cooling elements arranged in a flow passage adapted to be flown through by a flow medium in a flowing direction, characterized in that
- the components are successively arranged in the flowing direction,
- each component consists of a first set and a second set of at least two cooling elements (25), wherein each cooling element consists of at least two cooling tubes,
- the cooling elements of the first and the second set are spaced substantially parallel to each other in a plane running substantially perpendicularly to the flowing direction,
- the cooling elements of the first set being angularly offset to the cooling elements of the second set with respect to the longitudinal axis of the flow passage, and
- the cross sections of the cooling elements have a convex profile on the upstream and downstream side with regard to the flow direction or a droplet shape,
- the cooling elements of the first set of the adjacent component are arranged at least partially in the space between two cooling elements of the first set of the previous component, and
- the cooling elements of the second set of the adjacent component are arranged at least partially in the space between two cooling elements of the second set of the previous component.

A further subject matter of the invention is a process for producing low density extruded thermoplastic foam material wherein a polymer-gas mixture is fed into the extensional flow static heat exchanger according to the invention.

A further subject matter of the invention is a low density extruded thermoplastic foam material with a density between 12 kg/m³ to 50 kg/m³ according to ISO 845, which is obtainable by the above mentioned process.

Preferably a low density extruded thermoplastic foam material with a density between 12 to 45 kg/m³ , is obtainable by the above mentioned process

The low density extruded thermoplastic foam material shows a thermal conductivity of less than 0.028 W/mK according to EN 12667.

Moreover, the low density extruded thermoplastic foam material shows an average cell size determined by optical microscopy according to ASTM D3576 between 0.20 and 0.8 mm, more preferably between 0.25 and 0.75 mm.

The density of the material is measured according to ISO 845, the average cell size was determined by optical microscopy according to ASTM D3576, the thermal conductivity was determined according to EN 12667.

### Brief description of the figures

The invention will be described in more detail below with reference to examples shown in the drawings.
- Figure 1:: Schematic description of A) extensional deformation in flow through a convergence and B) shear deformation in laminar flow;
- Figure 2:: Flow through a convergence;
- Figure 3:: Schematic three-dimensional diagram showing one component consisting of a first set and a second set of three cooling elements each;
- Figure 4:: Schematic three-dimensional diagram showing two components, wherein the cooling elements of the first and second set of the adjacent component are arranged at least partially in the space between two cooling elements of the first and second set of the previous component;
- Figure 5:: Extensional flow heat exchanger described in this invention;
- Figure 6:: Flow path lines in the extensional flow heat exchanger. The arrows indicate areas of acceleration, hence extensional deformation;
- Figure 7:: Density as a function of level of blowing agent. The circled area represents results obtained with the extensional flow heat exchanger.

### Detailed description of the invention:

The invention presented here describes a compact heat exchanger which has been designed to minimize the laminar flow, namely shear deformation (laminar flow in Figure 1 B), within the exchanger, while maximizing the amount of cooled surface and distributive mixing by extensional deformation. The extensional deformation in this case is generated by acceleration of the fluid through a convergence (converging flow in Figure 1 A). It is widely known that extensional deformation is much more efficient for dispersive mixing than shear deformation (Grace, H.P., Chem. Eng. Commun., 14, (1982), 225-277; Bentley, B.J., and Leal, L.G., J. Fluid Mech., 167 (1986), 241-283), and some mixers based on extensional deformation have been developed for that purpose (such as US 5451106 and US 2003/0142582 and CN 101259750).

Figure 2 depicts extensional deformation in a converging flow in more detail: a capillary die (or any similar obstacle) is located in a larger tube to restrict the flow (without this restriction, only laminar flow would take place). In region A the flow lines converge, producing both shear and extensional deformation of the fluid (corresponds to Figure 1A). Extensional effects dominate in this region due to acceleration of the fluid, and only close to the walls some shear deformation takes place. The larger the ratio of convergence (d_{B}/d_{C}) is, the higher the amount of extensional deformation is. In region B the shear deformation dominates due to laminar flow (corresponds to Figure 1B). By minimizing the length of the region B, (l_{C} ~ 0), and by using round entry and exit profiles, the amount of shear deformation is minimized and mostly extensional deformation takes place. This has been the purpose in the design of the heat exchanger introduced in this invention.

The concept of converging flow has been used in this case, where the so called "extensional flow heat exchanger" consists of a number of converging and diverging sections which are created by staggered cooling elements, i.e. each cooling element is at a different position than the previous, in order to cool down the exiting, diverging melt also from the middle. The converging sections were simply implemented by using cooled, high pressure steel tubes, keeping the distance of the tubes (e.g. tubes with a diameter of 12mm) constant in both sideways and downstream direction. Characteristic for such an extensional flow heat exchanger is that the cooling elements (tubes in this case) stand in an angle (e.g. 90° ± 5°) to the flow of the polymer, i.e. they are perpendicular to the flow. This forces the material to go through the convergence (extensional deformation), and not to follow the direction of cooling elements, thus creating unwanted shear deformation. The ratio of convergence (d_{B}/d_{C}) was kept close to 2 throughout the heat exchanger in order not to generate significant pressure drop.

An extensional flow static heat exchanger 10 according to the invention consists of at least two components 20 of tubular cooling elements 25 arranged in a flow passage adapted to be flown through by a flow medium in a flowing direction, wherein the components 20 are successively arranged in the flowing direction and each component 20 consists of a first set 21 and a second set 22 of at least two cooling elements 25, wherein each cooling element consists of at least two cooling tubes. The cooling elements 25 of the first 21 and the second set 22 are spaced substantially parallel to each other in a plane running substantially perpendicularly to the flowing direction. The cooling elements 25 of the first set 21 being angularly offset to the cooling elements of the second set 22 with respect to the longitudinal axis of the flow passage. The cross sections of the cooling elements 25 have a convex profile on the upstream and downstream side with regard to the flow direction or a droplet shape. The cooling elements 25 of the first set 21 of the adjacent component 21 b are arranged at least partially in the space between two cooling elements 25 of the first set 21 of the previous component 21 a. The cooling elements 25 of the second set 22 of the adjacent component 22b are arranged at least partially in the space between two cooling elements 25 of the second set 22 of the previous component 22a.

Preferably, the cooling elements 25 of the first set 21 are positioned in a 90° ± 5° angle to the cooling elements 25 of the second set 22.

Furthermore, depending on rheological characteristics of the polymer and of the polymer-gas mixture, different sizes and shapes of tubing, for example round, oval or droplet shape, wherein the droplet has a convex profile on the upstream side and different distances between the tubes may be used.

The tubes in the cooling elements 25 may have different diameters. The diameter of a tube depends on the cooling range, the required cooling efficiency and the throughput of the extruder. The diameter of a tube in a cooling element 25 is at least 2.5 mm in diameter and not more than 120 mm in diameter, preferably between 10 to 30 mm in diameter.

The space between two adjacent tubes in a cooling element 25 is defined as 50 to 200 % of the diameter of one tube of the cooling elements 25. The tubes of the cooling element 25 are preferably arranged with a distance of not less than 4 mm and not more than 60 mm. The distance of the tubes in the cooling elements 25 depends on the throughput and required cooling efficiency.

The first set 21 of cooling elements 25 are arranged in a distance to the second set 22 of cooling elements 25 of not less than 50% and not more than 200% in reference to the diameter of one tube of the cooling elements 25.

Preferably, the cooling elements 25 of the first 21 and second 22 set of the adjacent component 21 b, 22b are arranged tessellated to the cooling elements 25 of the first 21 and the second 22 set of the previous component 21 a, 22a.

In another embodiment, a vacuum area is positioned downstream after the exchanger 10 exit, more specifically the exiting foam (extrudate) is subjected to pressure lower than atmospheric pressure. With such vacuum treatment even lower densities may be possible, as has been shown in US 6291539.

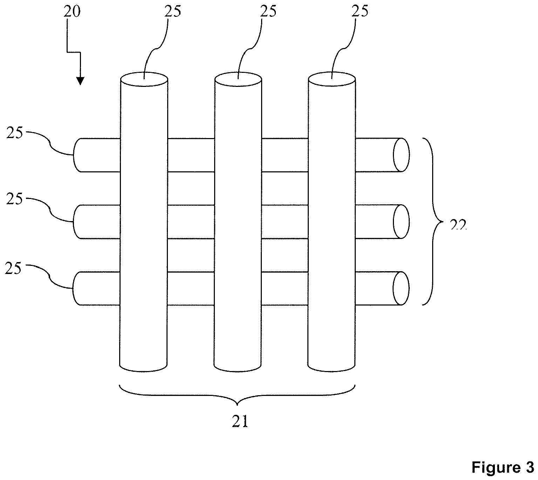

Figure 3 shows a schematic diagram of one component 20 consisting of a first set 21 and a second set 22 of cooling elements 25 with three tubes each. In this embodiment, the tubes of the cooling elements 25 are arranged with a distance of 100% of the diameter of one tube of the cooling elements 25. The distance of the cooling elements 25 depends on the throughput and the required cooling efficiency.

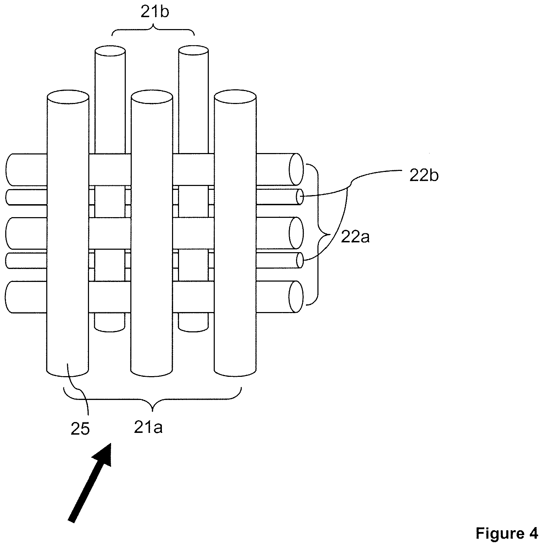

Figure 4 shows a schematic three-dimensional diagram of two components 20, wherein the first (previous) component 21 a, 22a and the second component 21 b, 22b are arranged successively in the flowing direction (see arrowhead in Figure 4). The distance between the tubes in the cooling elements 25 in this embodiment is 100% in reference to the diameter of the tubes. The cooling elements 25 of the first set 21 are positioned in a 90° ± 5° angle to the cooling elements 25 of the second set 22. In this embodiment, the cooling elements 25 of the first 21 and second 22 set of the adjacent component 21 b, 22b are arranged tessellated to the cooling elements 25 of the first 21 and the second 22 set of the previous component 21 a, 22a.

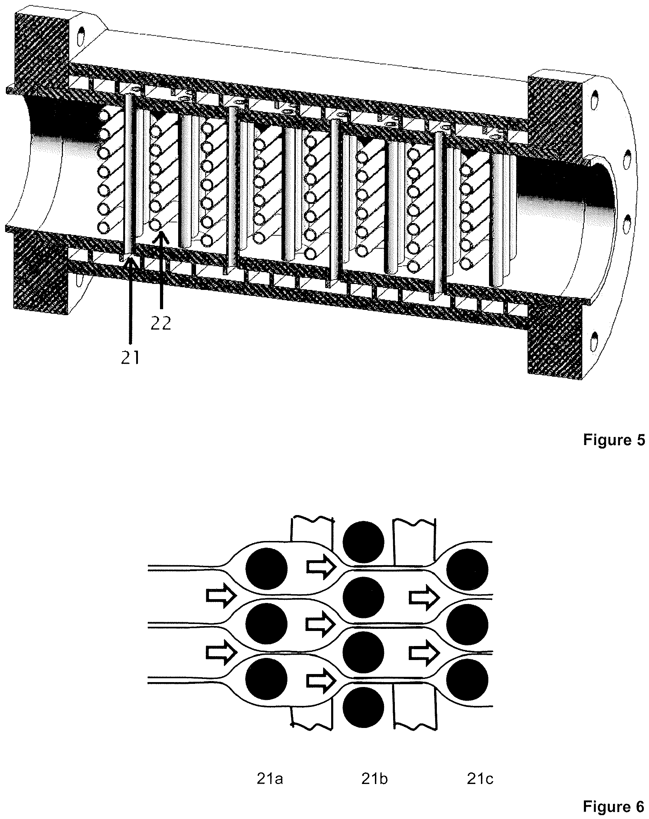

Figure 5 shows the extensional flow heat exchanger used in this work. Here the material flows from left to right, and each of the vertical 21 and horizontal 22 cooling elements (steel tubes) are cooled down by thermal oil, as is also the exterior shell of the exchanger, to a temperature close to solidification point of the polymer-gas mixture. This temperature depends on the level of gas, and may be easily adjusted by thermal regulator. In the case of PET which was used in this work this temperature may vary from 265° to 285°C, depending on raw material(s), additives, and target density.

Figure 6 depicts in more detail the path lines (flow of material) inside the heat exchanger, and the purpose of laying the tubes 21a, 21b, 21c (black dots) in different position compared to the previous layer: within each converging section the material is accelerated through the convergence and the external layer gets cooled down. The arrows in Figure 6 indicate the areas of acceleration, hence areas of extensional deformation. As the material meets the second layer 21 b of cooled tubes, the internal, and much warmer, material becomes now the new external layer and is cooled down. This is done multiple times so that the whole melt becomes homogeneously cooled down. In one embodiment a total number 16 layers and a total number of 104 steel, high pressure tubes is used. This creates a total area of 0.570 m² of metal surface which may be cooled down and is in contact with the polymer-gas mixture. For comparison purposes, a similar size of Sulzer mixer^{®} has 0.095 m² of cooled metal per polymer-gas mixture, and a Fluitec mixer^{®} roughly 0.2 m² of cooled surface (estimated from the drawings presented in the previously mentioned patent).

In the process for producing low density extruded thermoplastic foam material according to the invention, an extruder, preferably a twin-screw extruder is equipped with an extensional flow static heat exchanger 10.

In the process according to the invention, a polymer-gas mixture is fed into the equipment, i.e. the extruder, equipped with an extensional flow static heat exchanger 10.

Preferably the polymer material is a thermoplastic material, virgin or recycled, or a mixture or blend of any of them.

Virgin thermoplastic material (resin) according to this invention is a polymer that has never been made into a finished product. It is the new polymer that any factory gets directly from the manufacturer of the polymer.

Recycled or post-consumer thermoplastic material (resin) according to this invention is a material that has at least once been made into a finished product. The material has been extracted from industrial or household waste by means of recycling, where a substantial part of contaminants and dirt has been removed.

The polymer material is Polyethylene terephthalate (PET), Polybutylene terephthalate (PBT), Polycarbonate (PC), Polyetheretherketone (PEEK), Polyetherimid (PEI), Polymethacrylimid (PMI), Polymethylmethacrylat (PMMA), Polystyrene (PS), Polyvinylchloride (PVC) or Polyamide (PA), or a mixture or blend of any of them.

The polymer-gas mixture consists also of nucleating agent(s) and/or flame retardant(s), and/or elastomeric impact modifier(s). Typical nucleating agents are present in unmolten form and may compose for example of talc, calcium carbonate, glass spheres, nanoclays, PTFE particles. Possible flame retardant systems are for example halogenated flame retardants (with or without antimonytrioxide), phosphor based flame retardants, metal stannates and expandable graphites. Elastomeric impact modifiers may be selected from a large group of polymeric materials, including thermoplastic elastomers such as styrenic block copolymers (SEBS, SBS, SIBS, etc.), acrylates (EBA, EMA, EEA, etc.), polyolefins, polyamines, polyurethanes, copolyesters, and even so called interpolymers.

In one embodiment of the process according to the invention, the cooling elements 25 of the extensional flow static heat exchanger 10 are cooled down to a temperature not more than 10°C above the solidification point of the polymer-gas mixture.

In one embodiment of the process according to the invention, the polymer-gas mixture comprises at least 75% wt (based on the total amount of the polymer-gas mixture) of PET.

Preferably, the PET material consists of at least 70 wt% (based on the total amount of PET) of recycled, post-consumer PET (r-PET).

The viscosity of the resin may be increased during the extrusion foaming process by means of chain extenders. A typical virgin resin has an intrinsic viscosity from 0.65 to 0.85 dl/gm, whereas foaming is very difficult with resins having intrinsic viscosity below 1.0 dl/gm (measured according to ASTM D4603 using 60% Phenol and 40% Tetrachlorethane solution). The choice and amount of chain extenders depend on the targeted end-product, but as a guideline the intrinsic viscosity of the foam is higher than 1.2 dl/gm.

In one embodiment of the process according to the invention, the cooling elements 25 of the extensional flow static heat exchanger 10 are cooled down to a temperature between 265° and 285°C.

Also higher density foams are possible to manufacture using this technology, and the foam is characterized by having improved cellular structure, more specifically finer and more uniform cells throughout the foam.

This type of heat exchanger may be easily scaled up or down in size to fit the specific needs of heat transfer and throughput of the extruder.

It is made in industrial scale with throughput higher than 100 kg/hr, preferably over 300 kg/hr.

According the invention, a low density extruded thermoplastic foam material with a density of 12 to 50 kg/m³ is obtainable by the above mentioned process.

Preferably a low density extruded thermoplastic foam material with a density between 12 to 45 kg/m³ , according to ISO 845, is obtainable by reactive extrusion of PET resin.

Most preferably a low density extruded thermoplastic foam material with a density below 40 kg/m³, is obtainable by reactive extrusion of PET resin.

Reactive extrusion according to this invention means that the melt viscosity and melt strength of the material is increased by means of chain extension.

A foamed article can be manufactured with the above described material.

### Comparative example 1:

A medium size Sulzer mixer and low throughput: a twin-screw extruder FG-75.2 with a screw diameter of 75 mm (manufactured by Fagerdala Benelux) was equipped with a SMB-R 120 Sulzer mixer (cooled area per kilo throughput at 40 kg/hr = 526 kg/h*m²). The equipment was used to foam polyethyleneterephtalate (Ramapet 9921^{®} from Indorama) using a low level of nucleating agent, chain extender package (see EP 2253659A1 for description) and a physical blowing agent. The amount of physical blowing agent was slowly increased until the foam became unstable (observed as rough surface and holes within the foam). The Sulzer mixer was set to 265°C, as any further reduction did lead to increased pressure drop in the exchanger, indicating freezing (solidification) of the melt. The pressure drop in the mixer was measured as 16 bars and the minimum density possible with this equipment was 54 kg/m³. Average cell size was determined being 1.03 mm by optical microscopy according to ASTM D3576. It is also noted that cell size varied a lot throughout the sample, having larger cells and voids in the middle of the foam. The thermal conductivity was determined after 4 months of tempering at RT as 0.028 W/mK according to EN 12667.

### Comparative example 2:

A large Sulzer mixer and high throughput: a twinscrew extruder BC-180 with a screw diameter of 180 mm (manufactured by BC Foam) was equipped with the largest possible Sulzer mixer SMB-R 200 (cooled area per kilo throughput at 450 kg/hr = 1052 kg/h*m²). The equipment was used to foam polyethylene terephthalate (Ramapet 9921^{®} from Indorama) using a low level of nucleating agent, chain extender package and a physical blowing agent. The amount of physical blowing agent was slowly increased until the foam became unstable. The Sulzer mixer was set to 268°C, as any further reduction did lead to increased pressure drop in the exchanger. The pressure drop in the mixer was measured as 18 bars and the minimum density possible with this set-up was 64 kg/m³. Average cell size was determined being 1.12 mm by optical microscopy according to ASTM D3576. It is also noted that cell size varied throughout the sample, having larger cells and a few voids in the middle of the foam. The thermal conductivity was determined after 3 months of tempering at RT as 0.028 W/mK according to EN 12667.

### Comparative example 3:

Fluitec mixer: a twin-screw extruder MIC27/GL-40D with a screw diameter of 27 mm and 40D length (manufactured by Leistritz) was equipped with a CSE XR DN150 type of Fluitec heat exchanger. The equipment was used to foam polyethylene terephthalate (Ramapet 9921^{®} from Indorama) using a low level of nucleating agent, chain extender package and a physical blowing agent. The Fluitec heat exchanger temperature was varied between 275° and 248°C, and no freezing of the melt was observed. However, due to a long residence time of the line, good quality foam was not obtained. Average cell size was not determined.

### Comparative example 4:

Fluitec mixer: a twin-screw extruder Coperion ZSK30 MC with 30mm screw diameter and 48D length was equipped with a CSE XR DN150 type of Fluitec heat exchanger. The equipment was used to foam polyethylene terephthalate (Ramapet 9921^{®} from Indorama) using a low level of nucleating agent, chain extender package and a physical blowing agent. The Fluitec heat exchanger temperature was varied between 275° and 248°C, and no freezing of the melt was observed. This extruder was characterized of having much shorter residence time than the extruder used in Comparative example 3. However, good quality foam was not obtained due to lack of pressure.

### Comparative example 5:

Comparative example 1 was repeated, but targeting an end density of 100 kg/m³ (measured 99.2 kg/m³). The Sulzer mixer was set to 267°C, as any further reduction did lead to an increased pressure drop in the exchanger, indicating freezing of the melt. The pressure drop in the mixer was measured as 17 bars. The average cell size was determined being 0.84 mm by optical microscopy according to ASTM D3576. It is also noted that cell size varied throughout the sample, having somewhat larger cells in the middle of the foam. The thermal conductivity was determined after 4 months of tempering at RT as 0.031 W/mK according to EN 12667.

### Innovative example 1:

Heat exchanger of this invention: a twin-screw extruder with a screw diameter 75 (manufactured by Fagerdala Benelux) was equipped with an extensional flow heat exchanger shown in Figure 5 (cooled area per kilo throughput = 108 kg/h*m²). The equipment was used to foam polyethylene terephthalate (Ramapet 9921^{®} from Indorama) using a low level of nucleating agent, chain extender package and a physical blowing agent. The amount of physical blowing agent was slowly increased until the foam became unstable. The heat exchanger was set to 272°C, as any further reduction did lead to increased pressure drop in the exchanger, indicating possible freezing of the material. The pressure drop in the mixer was measured as 22 bars and the minimum density possible with this equipment was 35 kg/m³. This is to our knowledge by far the lowest ever produced density foam made of PET by physical foaming (without use of vacuum) and the cellular structure of the foam was much more uniform and contained in average smaller cells than foam from any of the comparative examples. Average cell size was determined being 0.29 mm by optical microscopy according to ASTM D3576. It is also noted that cell size was very uniform throughout the sample, nevertheless the "spaghettis" (due to multihole die) were visible and the walls of the spaghettis had even smaller cells. The thermal conductivity was determined after 4 months of tempering as 0.025 W/mK according to EN 12667.

### Innovative example 2:

Heat exchanger of this invention: Innovative example 1 was repeated, but using recycled polyethylene terephthalate, r-PET (from Meister Recycling GmbH) and a low level of nucleating agent (< 1.0 %), chain extender package (at a 50% higher level than usual) and a physical blowing agent. The amount of physical blowing agent was slowly increased until the foam became unstable. The heat exchanger was set to 271 °C, as any further reduction did lead to increased pressure drop in the exchanger. The minimum density possible with this equipment was 37.5 kg/m³. Average cell size was determined being 0.38 mm by optical microscopy according to ASTM D3576. It is also noted that cell size was very uniform throughout the sample, nevertheless the "spaghettis" were again visible and the walls of the spaghettis had even smaller cells. The thermal conductivity was determined after 3 months of tempering as 0.026 W/mK according to EN 12667.

### Innovative example 3:

Innovative example 1 was repeated, but adjusting the blowing agent level for a density of 100 kg/m³ (measured 98.6 kg/m³). The heat exchanger was set to 274°C, as any further reduction did lead to increased pressure drop in the exchanger, indicating possible freezing of the material. The average cell size was determined being 0.42 mm by optical microscopy according to ASTM D3576. It is also noted that cell size was very uniform throughout the sample, and the "spaghettis" were not visible but the product was very homogeneous throughout the sample. The thermal conductivity was determined after 4 months of tempering as 0.027 W/mK according to EN 12667.

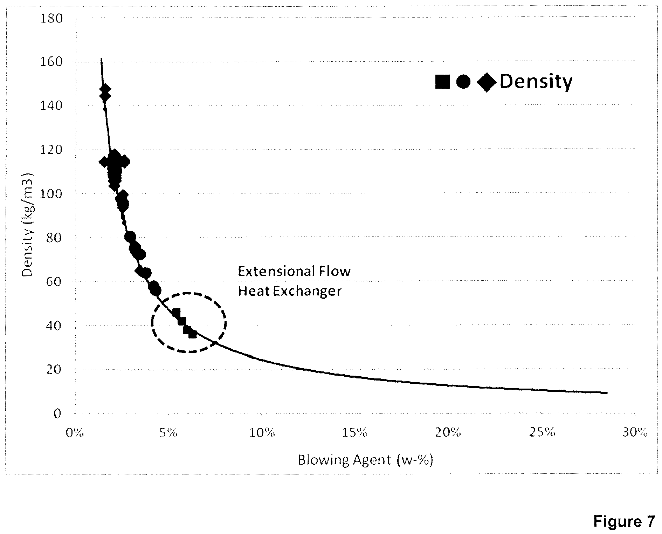

Figure 7 shows the achieved density as a function of level of hydrocarbon based blowing agent. The diamond and round shaped points indicate results from two different extrusion lines indicated in comparative examples 1 and 2, whereas the circled area (square points) represents the results achieved with the help of the extensional flow heat exchanger 10, according to the invention. A power law fit is shown to correlate with the results. The lowest possible density achieved in physical foaming with such an extrusion line is 12 kg/m³ using polyethylene and a hydrocarbon blowing agent.

## Claims

1. An extensional flow static heat exchanger (10) with at least two components (20) of tubular cooling elements (25) arranged in a flow passage adapted to be flown through by a flow medium in a flowing direction, **characterized in that**
- the components (20) are successively arranged in the flowing direction,
- each component (20) consists of a first set (21) and a second set (22) of at least two cooling elements (25), wherein each cooling element consists of at least two cooling tubes,
- the cooling elements (25) of the first (21) and the second set (22) are spaced substantially parallel to each other in a plane running substantially perpendicularly to the flowing direction,
- the cooling elements (25) of the first set (21) being angularly offset to the cooling elements of the second set (22) with respect to the longitudinal axis of the flow passage,and
- the cross sections of the cooling elements (25) have a convex profile on the upstream and downstream side with regard to the flow direction or a droplet shape,
- the cooling elements (25) of the first set (21) of the adjacent component (21 b) are arranged at least partially in the space between two cooling elements (25) of the first set (21) of the previous component (21 a), and
- the cooling elements (25) of the second set (22) of the adjacent component (22b) are arranged at least partially in the space between two cooling elements (25) of the second set (22) of the previous component (22a).

2. The extensional flow static heat exchanger (10) according to claim 1, wherein the cooling elements (25) of the first set (21) are positioned in a 90° ± 5° angle to the cooling elements (25) of the second set (22).

3. The extensional flow static heat exchanger (10) according to anyone of the preceding claims, wherein the first set (21) of cooling elements (25) are arranged in a distance to the second set (22) of cooling elements (25) of not less than 50% and not more than 200% in reference to the diameter of one tube of a cooling elements (25).

4. The extensional flow static heat exchanger (10) according to anyone of the preceding claims, wherein the tubes of the cooling element (25) are arranged with a distance of not less than 0.5 cm and not more than 6 cm.

5. The extensional flow static heat exchanger (10) according to anyone of the preceding claims, wherein a vacuum area is positioned downstream after the exchanger (10) exit.

6. The extensional flow static heat exchanger (10) according to anyone of the preceding claims, wherein the cooling elements (25) of the first (21) and second (22) set of the adjacent component (21b, 22b) are arranged tessellated to the cooling elements (25) of the first (21) and the second (22) set of the previous component (21 a, 22a).

7. A process for producing low density extruded thermoplastic foam material wherein a polymer-gas mixture is fed into an extensional flow static heat exchanger (10) according to claims 1 to 6.

8. The process according to claim 7, wherein the polymer material is a thermoplastic material, virgin or recycled, or a mixture or blend of any of them.

9. The process according to claim 7 or 8, wherein the polymer-gas mixture consists also of nucleating agent(s) and/or flame retardant(s), and/or elastomeric impact modifier(s).

10. The process according to anyone of claims 7 to 9, wherein the cooling elements (25) of the extensional flow static heat exchanger (10) are cooled down to a temperature not more than 10°C above the solidification point of the polymer-gas mixture.

11. The process according to anyone of claims 7 to 10, wherein the polymer material is PET, PBT, PC, PEEK, PEI, PMI, PMMA, PS, PVC or PA, or a mixture or blend of any of them.

12. The process according to anyone of claims 7 to 11, wherein at least 75% of the polymer material is PET.

13. The process according to claim 12, wherein the PET material consists at least 70% of recycled, post-consumer PET (r-PET).

14. The process according to any of claims 12 and 13, wherein the cooling elements (25) of the extensional flow static heat exchanger (10) are cooled down to a temperature between 265° and 285°C.

15. A low density extruded thermoplastic foam material with a density between 12 kg/m³ to 50 kg/m³ according to ISO 845, which is obtainable by the process according to claims 7 to 13.

16. The low density extruded thermoplastic foam material according to claim 15 with a density between 12 to 50 kg/m³ , which is obtainable by reactive extrusion of PET resin.

17. A foamed article manufactured from a material according to claims 15 or 16.
